# FASCICULE DE BREVET EUROPEEN

(11) **EP 2 729 651 B1**
(45) Date de publication et mention de la délivrance du brevet: **28.06.2017**
(21) Numéro de dépôt: 12733694.9
(22) Date de dépôt: 06.07.2012
(51) Int. Cl.: E06B 9/72, E06B 9/68, F16D 3/18, F16D 3/44

(54) **DISPOSITIF D'ACCOUPLEMENT ET INSTALLATION DOMOTIQUE COMPRENANT UN TEL DISPOSITIF**
KUPPLUNG SOWIE EINE HAUSHALTSINSTALLATION MIT EINER SOLCHEN KUPPLUNG
COUPLING AND HOME INSTALLATION WITH SUCH A COUPLING

(30) Priorité: 08.07.2011 FR 1156216
(43) Date de publication de la demande: 14.05.2014
(73) Titulaire: Somfy SAS, 74300 Cluses (FR)
(72) Inventeur: DUPIELET, Norbert, F-74700 Sallanches (FR); LAGARDE, Eric, F-74700 Sallanches (FR)
(74) Mandataire: Lavoix
(86) Numéro de dépôt international: PCT/EP2012/063276
(87) Numéro de publication internationale: WO 2013/007642

(56) Documents cités:
- EP-A1- 0 751 278
- DE-U1-202008 010 765
- FR-A- 970 629
- US-A- 2 011 147
- US-A- 3 296 827

## Description

L'invention a trait à un dispositif d'accouplement destiné à être disposé entre un arbre de sortie d'un moteur électrique et un arbre d'entrée d'un réducteur d'entraînement d'un écran ou d'un ouvrant appartenant à une installation de fermeture, de protection solaire ou de projection. L'invention concerne également une installation domotique qui comprend, entre autres, un tel dispositif d'accouplement.

Au sens de la présente invention, un écran comprend une partie mobile formée par un tablier ou un ensemble de lames qui est déplacé, le plus souvent par enroulement, entre une position relevée, où il laisse libre une ouverture, et une position abaissée, où il obture cette ouverture. Un tel écran peut être un volet ou une porte enroulable. L'écran peut également être un store de protection solaire, par exemple un store de terrasse ou un store vénitien. Un écran peut également être un écran utilisé pour la projection d'image, notamment sous forme vidéo. Au sens de l'invention, un ouvrant est une partie d'un dispositif de fermeture, tel qu'un vantail de portail ou un volet articulé autour d'un axe vertical sur le bord d'une fenêtre.

Il est connu d'utiliser un moteur électrique associé à un réducteur pour entraîner l'arbre d'enroulement du tablier souple d'un volet roulant ou d'un store. Ces matériels sont souvent intégrés au sein d'un actionneur dit tubulaire qui est introduit à l'intérieur d'un tube d'enroulement et qui lui est solidarisé au moyen d'une roue. L'accouplement entre l'arbre de sortie du moteur et l'arbre d'entrée du réducteur est parfois délicat car chacun de ces matériels est équipé de paliers qui supportent leurs arbres respectifs, lesquels ne sont pas forcément alignés ni même parallèles. Il en résulte des bruits de fonctionnement de l'actionneur, ainsi qu'une usure prématurée du réducteur, au moins dans certaines configurations.

Une solution intégrant un cardan monté sur l'un des arbres peut être envisagée. Elle est toutefois relativement onéreuse et complexe à mettre en oeuvre, tout en ne permettant un désalignement des axes des arbres à accoupler que dans une mesure limitée.

Il est par ailleurs connu de US-A-2 011 147 d'utiliser un ensemble de trois pièces, mobiles les unes par rapport aux autres, pour solidariser en rotation des éléments d'accouplement pourvus chacun d'un moyeu et d'une section élargie. L'ensemble de trois pièces comprend deux pièces latérales interagissant chacune avec un élément d'accouplement et une pièce centrale. La fabrication de ce matériel est complexe et coûteuse. En outre, la transmission du couple entre un élément d'accouplement et une pièce latérale associée repose sur l'engagement de nervures dans des gorges, avec une possibilité de déplacement relatif uniquement axial. Les pièces de l'ensemble de trois pièces et les éléments d'accouplement sont complexes et doivent donc être réalisés précisément et assemblés avec soin, ce qui renchérit le système de l'art antérieur.

Des problèmes analogues se posent avec le matériel connu de FR-A-970 629. Le document DE 20 2008 010 765 U1 décrit un dispositif d'accouplement selon le préambule de la revendication 1. C'est à ces inconvénients qu'entend plus particulièrement remédier l'invention en proposant un nouveau dispositif d'accouplement simple à fabriquer et à utiliser et fiable dans le temps, tout en étant adapté à une intégration au sein d'une installation domotique.

A cet effet, l'invention concerne un dispositif d'accouplement destiné à transmettre un couple entre un arbre de sortie et un arbre d'entrée appartement à une installation domotique de fermeture, de protection solaire ou de projection, tels qu'un arbre de sortie d'un moteur électrique et un arbre d'entrée d'un réducteur d'un actionneur d'entraînement d'un écran ou d'un ouvrant. Ce dispositif comprend un premier organe solidaire ou destiné à être rendu solidaire en rotation de l'arbre de sortie et pourvu d'au moins une rainure longitudinale externe ainsi qu'un deuxième organe solidaire ou destiné à être rendu solidaire en rotation de l'arbre d'entrée et pourvu d'au moins une rainure longitudinale externe. Ce dispositif comprend également un élément d'accouplement en rotation entre les premier et deuxième organes qui est équipé, sur au moins une surface, d'au moins deux séries de pions en saillie par rapport à cette surface, ces pions étant respectivement engagés dans la rainure longitudinale externe du premier organe et dans la rainure longitudinale externe du deuxième organe. Conformément à l'invention, chaque pion comprend une tête en tronçon de sphère qui dépasse de la surface de l'élément d'accouplement.

Au sens de l'invention, un élément d'accouplement tel qu'un manchon ou un plateau est une pièce monobloc ou multipartite qui, une fois fabriquée, est rigide, ce qui lui permet de transmettre efficacement un couple d'entraînement.

Grâce à l'invention, il est possible de constituer, dans un encombrement réduit, un accouplement efficace entre l'arbre de sortie et l'arbre d'entrée, la fabrication et/ou l'assemblage des deux séries de pions en saillie étant simples à réaliser. L'utilisation d'un élément d'accouplement, tel qu'un manchon ou un plateau, et non pas de trois pièces mobiles les unes par rapport aux autres, garantit une transmission de couple efficace. D'autre part, les pions offrent des possibilités de mouvement dans plusieurs directions par rapport aux rainures longitudinales externes des premier et deuxième organes. Ceci permet de simplifier cet élément d'accouplement et ces organes.

Selon des aspects avantageux mais non obligatoire de l'invention, un tel dispositif peut incorporer une ou plusieurs des caractéristiques suivantes prise dans toute combinaison techniquement admissible :
- L'élément d'accouplement est un manchon dans le volume intérieur duquel sont engagés au moins partiellement les premier et deuxième organes et les pions des deux séries de pions s'étendent en saillie par rapport à une surface radiale interne de ce manchon.
- L'élément d'accouplement est un plateau disposé entre les premier et deuxième organes, le long d'un axe de rotation d'un de ces organes, et les pions des deux séries de pions s'étendent en saillie par rapport à deux surfaces axiales de ce plateau, dans deux directions opposées parallèles à l'axe de rotation.
- Chaque premier et deuxième organe est pourvu de plusieurs rainures longitudinales externes, alors que l'élément d'accouplement est équipé de plusieurs pions, en nombre égal à la somme des nombres de rainures longitudinales externes des premier et deuxième organes, avec une première série de pions situé à proximité d'une première extrémité axiale de l'élément d'accouplement et chacun respectivement engagé dans l'une des rainures longitudinales externes du premier organe et une deuxième série de pions située à proximité d'une deuxième extrémité axiale de l'élément d'accouplement, opposée à la première extrémité axiale, chacun respectivement engagé dans l'une des rainures longitudinales externes du deuxième organe.
- Les rainures longitudinales externes et les pions sont régulièrement répartis, respectivement autour des axes longitudinaux et centraux des premier et deuxième organes et de l'élément d'accouplement.
- Les pions de la deuxième série sont décalés, angulairement autour d'un axe longitudinal et central de l'élément d'accouplement, par rapport aux pions de la première série.
- Le décalage angulaire entre deux pions appartenant respectivement aux première et deuxième séries a une valeur égale à la moitié de la valeur du décalage angulaire entre deux pions d'une même série.
- Les pions des deux séries sont alignés selon des directions parallèles à un axe central de l'élément d'accouplement.
- Chacun des premier et deuxième organes est pourvu de trois rainures longitudinales externes reparties à 120° autour d'un axe central de cet organe et l'élément d'accouplement est équipé de deux séries de trois pions, les pions de chaque série étant repartis à 120° autour d'un axe longitudinal et central de l'élément d'accouplement.
- L'élément d'accouplement est pourvu, sur au moins un secteur angulaire situé entre deux pions d'une même série, d'un évidement.
- Les premier et deuxième organes sont des pièces identiques rapportées sur l'arbre de sortie, d'une part, et sur l'arbre d'entrée, d'autre part.
- Les pions sont des pièces rapportées sur l'élément d'accouplement et immobilisées sur celui-ci en rotation, par coincement, sertissage ou coopération de formes. Dans ce cas, on peut prévoir que l'élément d'accouplement est pourvu de rainures axiales aptes à recevoir chacune en coulissement une queue d'ancrage d'un pion et chacune bordée par un espace de réception d'un talon terminal de la queue d'ancrage. En variante, l'élément d'accouplement est pourvu de logements de réception et d'immobilisation de queues d'ancrage des pions.
- Les pions sont monoblocs avec l'élément d'accouplement.
- Dans le cas où l'élément d'accouplement est un plateau, une surface axiale du premier organe, du deuxième organe ou du plateau est pourvue d'une portion en saillie selon une direction parallèle à un axe central du plateau, cette portion en saillie venant en appui sur une surface axiale du plateau, du premier organe ou du deuxième organe.

L'invention concerne également une installation domotique qui comprend un ouvrant, un écran de fermeture ou de protection solaire ou un écran de projection, ainsi qu'un dispositif d'accouplement tel que mentionné ci-dessus, intercalé entre un arbre de sortie, notamment d'un moteur électrique, et un arbre d'entrée, notamment d'un réducteur d'entraînement de l'ouvrant ou de l'écran.

L'invention sera mieux comprise et d'autres avantages de celle-ci apparaîtront plus précisément à la lumière de la description qui va suivre des cinq modes de réalisation d'un dispositif d'accouplement et d'une installation conformes à son principe, donné à titre d'exemples et faisant référence aux dessins annexés dans lesquels :
- la figure 1 est une illustration schématique d'une installation de fermeture conforme à l'invention,
- la figure 2 est une vue en perspective éclatée d'un dispositif d'accouplement utilisé dans l'installation de la figure 1,
- la figure 3 est une coupe à plus grande échelle selon la ligne III-III à la figure 1,
- la figure 4 est une vue analogue à la figure 2 pour un dispositif d'accouplement conforme à un deuxième mode de réalisation de l'invention,
- la figure 5 est une coupe analogue à la figure 3 pour le mode de réalisation de la figure 4,
- la figure 6 est une vue analogue à la figure 2 pour un dispositif d'accouplement conforme à un troisième mode de réalisation de l'invention,
- la figure 7 est une coupe analogue à la figure 3 pour le mode de réalisation de la figure 6
- la figure 8 est une vue en perspective éclatée d'un manchon appartenant à un dispositif d'accouplement conforme à un quatrième mode de réalisation de l'invention Et
- la figure 9 est une vue en perspective éclatée d'un dispositif d'accouplement conforme à un cinquième mode de réalisation de l'invention.

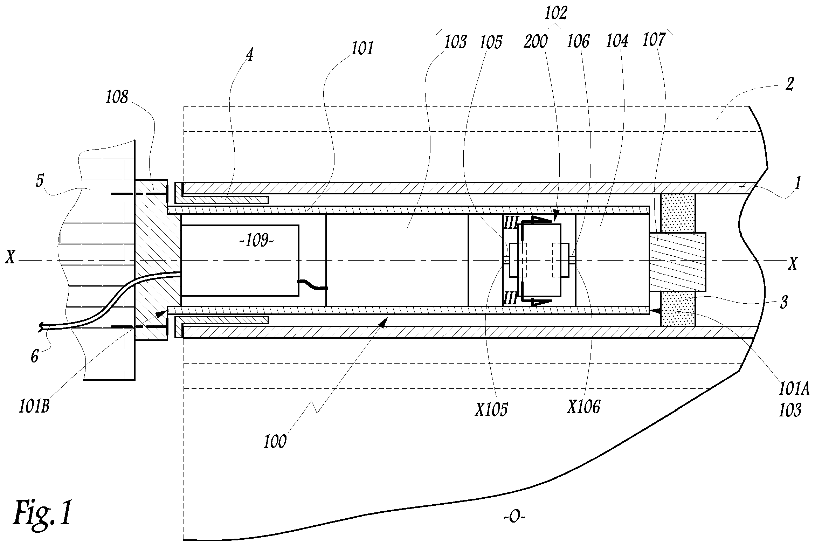

La figure 1 représente un actionneur tubulaire 100 destiné à entraîner en rotation un tube d'enroulement 1 sur lequel peut être enroulé un tablier 2 d'obturation d'une ouverture O. Le tube 1 est entraîné par l'actionneur 100 en rotation autour d'un axe de révolution X-X qui est disposé horizontalement en partie haute de l'ouverture. L'ouverture O est, par exemple, ménagée dans les parois d'un bâtiment. L'actionneur 100, le tube 1 et le tablier 2 forment alors un volet roulant motorisé.

L'actionneur 100 comprend un tube cylindrique fixe 101 dans lequel est monté un moto-réducteur 102 qui comprend un moteur électrique 103 et un réducteur 104. On note 105 l'arbre de sortie du moteur 103 et 106 l'arbre d'entrée du réducteur 104.

L'arbre de sortie 107 du réducteur 104 s'étend en saillie à une extrémité 101 A du tube fixe 101 et entraîne une roue 3 solidaire en rotation du tube 1.

Le tube d'enroulement 1 tourne autour de l'axe X-X et du tube fixe 101 grâce à deux liaisons pivots. Une couronne-palier 4, montée sur la périphérie extérieure du tube 101, à proximité de son extrémité 101B opposée à l'extrémité 101 A, assure la première liaison pivot. La deuxième liaison pivot est installée à l'autre extrémité du tube 1 et n'est pas visible à la figure 1.

L'actionneur 100 comprend également une pièce de fixation 108 qui fait saillie à l'extrémité 101B du tube 101 et permet de fixer l'actionneur 100 sur un bâti 5 du bâtiment auquel appartient l'ouverture O. Cette pièce de fixation 108 est en outre destinée à obturer le tube 101, ainsi qu'à supporter un module de commande 109 de l'alimentation du moteur 103. Ce module de commande est alimenté par un câble secteur 6.

Un dispositif d'accouplement 200 disposé entre les arbres 105 et 106 permet de transmettre le couple de sortie du moteur 103 au réducteur 104. On note X105, l'axe longitudinal et central de l'arbre 105. On note X106 l'axe longitudinal et central de l'arbre 106. En théorie, ces axes sont parallèles, alignés entre eux et confondus avec l'axe X-X. En pratique, ce n'est pas forcément le cas. Les axes X105 et X106 peuvent être parallèles, mais non confondus, ou séquents, en fonction des tolérances de fabrication des éléments constitutifs de l'actionneur 100 et de la qualité de son montage. Le dispositif 200 permet de s'accommoder de ces défauts d'alignement.

Lors du fonctionnement de l'actionneur 100, le moto-réducteur 102 entraîne en rotation l'arbre 7 qui, à son tour, entraîne en rotation le tube 1 par l'intermédiaire de la roue 3. A sein du moto-réducteur 102, le couple d'entraînement de l'arbre 107 est transmis de l'arbre 105 à l'arbre 106, au moyen du dispositif 200.

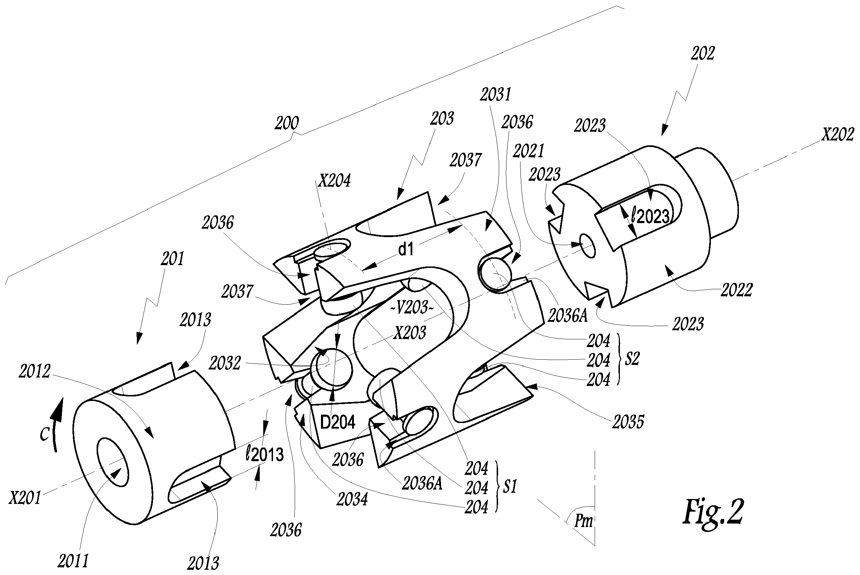

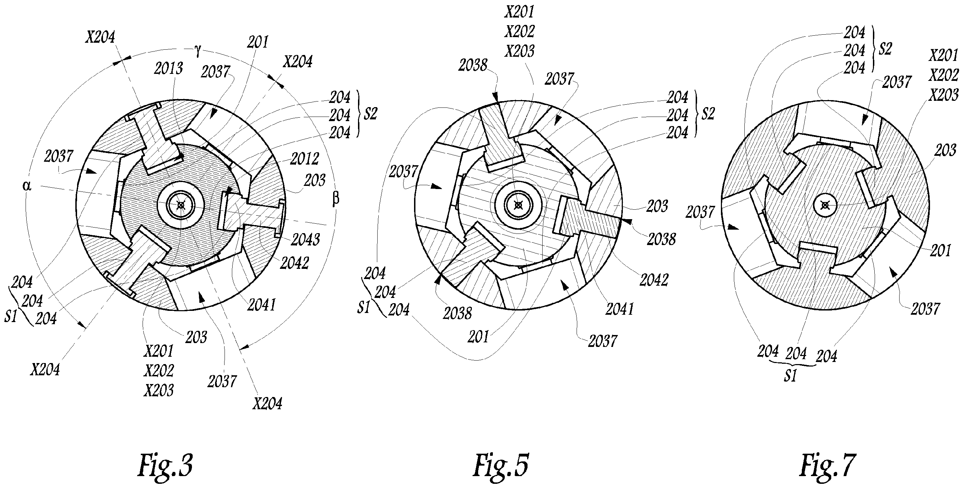

Comme cela ressort plus particulièrement des figures 2 et 3, le dispositif 200 comprend un premier embout 201 en métal fritté pourvu d'un alésage central 2011 centré sur un axe longitudinal X201 de l'embout 201. La surface radiale externe 2012 de l'embout 201 est cylindrique à section circulaire centrée sur l'axe X201. Elle est pourvue de trois rainures longitudinales externes 2013 régulièrement réparties autour de l'axe X201, c'est-à-dire formant entre elles un angle de 120° autour de l'axe X201. Les rainures 2013 débouchent à une extrémité du premier embout 201 et peuvent être qualifiées de longitudinales, dans la mesure où leur plus grande dimension est parallèle à l'axe X201.

Le dispositif 200 comprend également un deuxième embout 202 également réalisé en métal fritté et qui est pourvu d'un alésage central 2021 centré sur un axe longitudinal X202 de l'embout 202. La surface externe 2022 de l'embout 202 est cylindrique et à section circulaire centrée sur l'axe X202, sauf au niveau des trois rainures longitudinales externes et débouchantes 2023, dont la plus grande dimension est parallèle à l'axe X202 et qui sont réparties, dans la surface 2022, à 120° autour de l'axe X202.

Les dimensions respectives des alésages 2011 et 2021 sont prévues pour permettre un emmanchement en force des embouts 201 et 202 respectivement sur l'arbre 105 et sur l'arbre 106. Lorsque ces embouts sont ainsi emmanchés, ils sont solidaires en rotation des arbres précités et les axes X105 et X201, d'une part, X106 et X202, d'autre part, sont confondus.

La réalisation des embouts 201 et 202 en métal fritté permet d'obtenir des pièces dont la géométrie est bien contrôlée, qui sont résistantes et dont le prix de revient est particulièrement attractif. Ils peuvent alors être emmanchés serrés sur les arbres. Alternativement, selon les couples de rotation mis en jeu, ces embouts peuvent également être réalisés par usinage ou injection, dans des matières plastiques ou en zamak. Ils sont alors rapportés sur des arbres rainurés par exemple pour leur maintien en rotation.

Le dispositif d'accouplement 200 comprend également un manchon 203 qui constitue un élément d'accouplement entre les embouts 201 et 202, qui est à section circulaire et qui s'étend autour d'un axe longitudinal et central X203. On note 2031, la surface radiale interne du manchon 203 et 2032 sa surface radiale externe. On note V203 le volume intérieur du manchon 203, ce volume étant bordé radialement sur l'extérieur par la surface 2031. Le manchon 203 est équipé de six pions 204 qui s'étendent respectivement en saillie, à partir de la surface 2031 et en direction de l'axe X203 dans le volume V203, respectivement au voisinage d'une première surface d'extrémité axiale 2034 du manchon 203 et d'une deuxième surface d'extrémité axiale 2035 de ce manchon, opposé à la première.

Les pièces 203 et 204 sont préférentiellement obtenues par usinage ou injection de matière plastique ou de zamak.

Le manchon 203 est pourvu, au voisinage de sa surface extrémité 2034, de trois entailles 2036 qui sont bordées par une feuillure 2036A du côté de la surface 2032 et qui traversent le manchon 203, de la surface 2031 vers la surface 2032, radialement par rapport à l'axe X203. Les entailles 2036 débouchent sur la surface 2034 et ont une largeur, mesurée sur une direction orthoradiale par rapport à l'axe X203, qui diminue en s'éloignant de la surface d'extrémité 2034.

Par ailleurs, chaque pion 204 comprend une tête 2041 qui dépasse de la surface 2031 en direction de l'axe X203, ainsi qu'une queue d'ancrage 2042 engagée dans une entaille 2036. La tête 2041 de chaque pion est en tronçon de sphère. A l'opposé de sa tête 2041, chaque pion 204 a un talon circulaire 2043, de diamètre supérieur à la largeur minimale d'une entaille 2036, dans sa partie la plus éloignée de la surface d'extrémité 2034, mais inférieure à la largeur minimale d'une feuillure 2036A. Il est ainsi possible de retenir en position un pion 204 dans chaque entaille 2036, chaque pion étant maintenu, selon une direction parallèle à un axe central X204 de sa queue d'ancrage 2042, par la coopération de la tête 2041 avec la surface 2031, sur un côté interne du manchon 203, et la coopération du talon 2043 avec la feuillure 2036A, sur le côté externe du manchon. Avantageusement, les talons 2043 ne dépassent pas de la surface externe 2032 du manchon.

Les pions 204 sont distribués en une première série S1 de trois pions 204 régulièrement répartis, à 120° autour de l'axe X203 et proches de la surface d'extrémité 2034, dans la mesure où ils sont reçus dans des entailles 2036 qui débouchent sur cette surface d'extrémité. Trois autres pions 204 constituent une deuxième série S2 qui est proche de la deuxième surface d'extrémité 2035. Ils sont disposés dans des entailles 2036 qui débouchent sur cette surface et régulièrement répartis, à 120°, autour de l'axe X203. On note α l'angle de décalage, autour de l'axe X203, des axes X204 de deux pions 204 de la première série S1. Cet angle vaut 120° et il a la même valeur que l'angle β de décalage, autour de l'axe X203, des axes X204 de deux pions de la deuxième série S2.

Les pions 204 de la première série S1 et les pions 204 de la deuxième série sont disposés de part et d'autre d'un plan médian P_{M} du manchon, ce plan étant perpendiculaire à l'axe X203 et équidistant des surfaces 2034 et 2035. La distance d1 entre les séries de pions S1 et S2, mesurée parallèlement à l'axe X203, peut être optimisée : plus elle est longue, plus le glissement nécessaire entre chaque pion 204 et chaque rainure 2013 ou 2023 est réduit, ce qui favorise une meilleure prise en compte du désalignement des arbres.

Les pions 204 sont identiques. On note D204, le diamètre maximal des têtes 2041 qui sont circulaires et centrées sur les axes X204 des différents pions. On note I₂₀₁₃ et I₂₀₂₃ les largeurs des rainures 2013 et 2023 mesurées selon des directions orthoradiales respectivement par rapport aux axes X201 et X202. Le diamètre D204 est choisi légèrement inférieur aux largeurs I₂₀₁₃ et I₂₀₂₃ qui sont identiques, pour permettre le coulissement et le guidage des têtes 2041 dans les rainures 2013 et 2023.

Ainsi, en configuration montée du dispositif 200, comme représenté à la figure 3, il est possible d'engager les embouts 201 et 202 dans le volume 203 en amenant les têtes 2041 des pions 204 de la série S1 dans les rainures 2013 du premier embout 201, alors que les têtes 2041 des pions 204 de la série S2 sont amenées dans les rainures 2023 du deuxième embout 202.

Un couple C de rotation autour de l'axe X201 peut ainsi être transmis de l'embout 201 au manchon 203, par la coopération des pions 204 et de série S1 avec les rainures 2013, puis du manchon 203 à l'embout 202 par la coopération des pions 204 de la série S2 avec les rainures 2023.

On remarque que, entre deux pions 204 de la série S1, le manchon 203 est pourvu de premiers évidements 2037 qui permettent de l'alléger et qui débouchent sur la surface d'extrémité 2034. De la même façon, d'autres évidements 2037 sont prévus entre deux pions 204 de la série S2 et débouchent sur la surface d'extrémité 2035.

Comme cela ressort de la figure 3, les premiers évidements 2037 s'étendent sur un secteur angulaire compris entre deux pions 204 de la série S1. De même, les autres évidements 2037 s'étendent sur un secteur angulaire compris entre deux pions de la série S2. Ces évidements s'étendent à partir d'une surface 2034 ou 2035 jusqu'au-delà des axes X204, le long de l'axe X203.

En outre, les pions 204 de la série S1 sont décalés angulairement par rapport aux pions 204 de la série S2 d'un angle γ égal à 60°, c'est-à-dire à la moitié de l'angle α. Un décalage angulaire, quel que soit l'angle de décalage, peut permettre de simplifier la fabrication du manchon 203. Alternativement, il est possible de conserver alignés les pions des séries S1 et S2.

Le dispositif 200 permet une transmission de couple efficace entre les embouts 201 et 202, alors que leurs axes X201 et X202 peuvent ne pas être alignés. En effet, les têtes 2041 des pions 204 engagées dans les rainures 2013 et 2023 sont légèrement mobiles axialement dans les rainures 2013 et 2023 des embouts 201 et 202. Ce mouvement relatif permet de compenser un défaut d'alignement de ces axes lors de la rotation des arbres 105 et 106 sur lesquels sont respectivement montés les embouts 201 et 202.

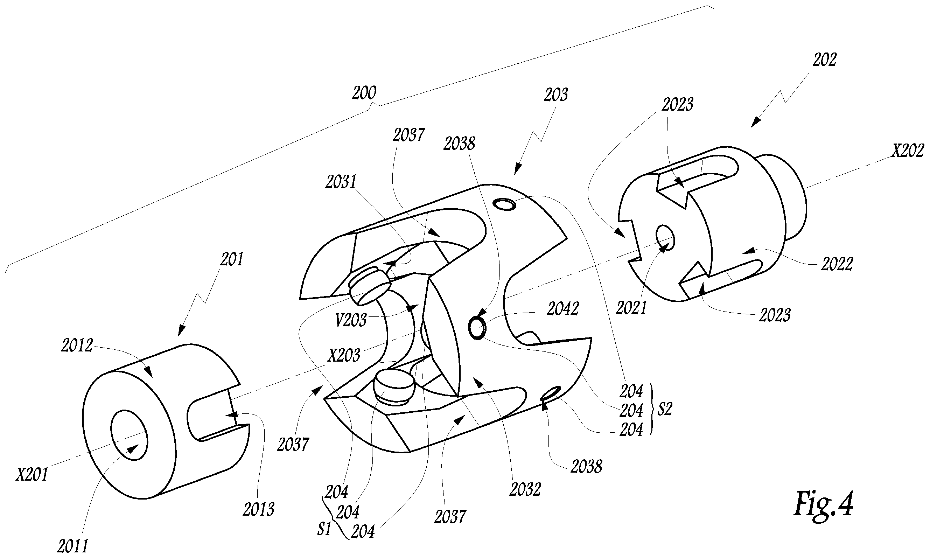

Dans les deuxième à cinquième modes de réalisation de l'invention représentés aux figures 4 à 7, les éléments analogues à ceux du premier mode de réalisation portent les mêmes références. Dans ce qui suit, on ne décrit que ce qui distingue ces modes de réalisation du premier.

Dans le mode de réalisation représenté aux figures 4 et 5, les queues 2042 des pions 204 sont dépourvues de talon et sont reçues dans des alésages correspondants 2038 du manchon 203 dans lequel ils sont emmanchés à force. Ce montage est plus solide que celui du premier mode de réalisation.

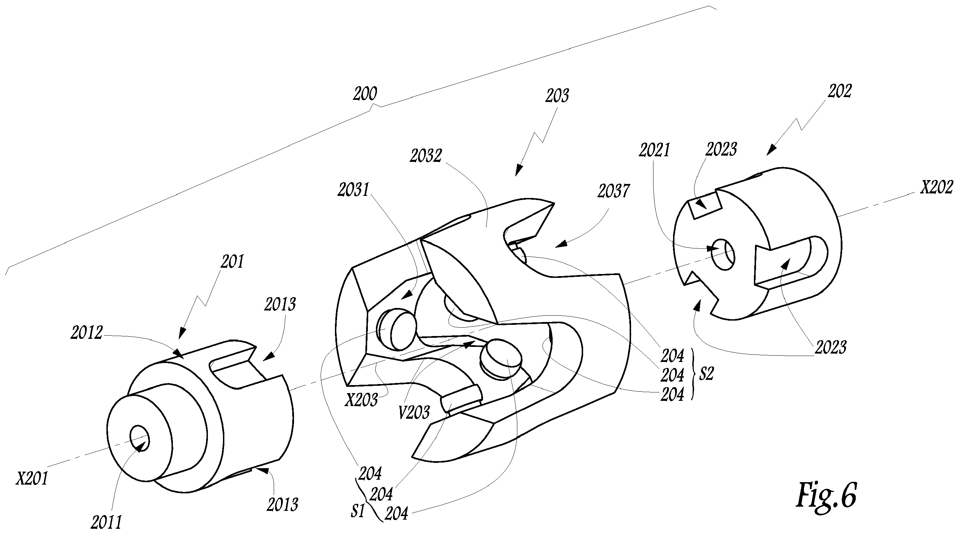

Dans le troisième mode de réalisation représenté aux figures 6 et 7, les pions 204 et le manchon 203 sont monoblocs. Dans ce mode de réalisation, le décalage d'angle γ, autour de l'axe X203, entre les pions 204 de la série S1 et les pions 204 de la série S2 permet la fabrication par frittage du manchon 203, sans avoir recours à des moules à tiroirs complexes.

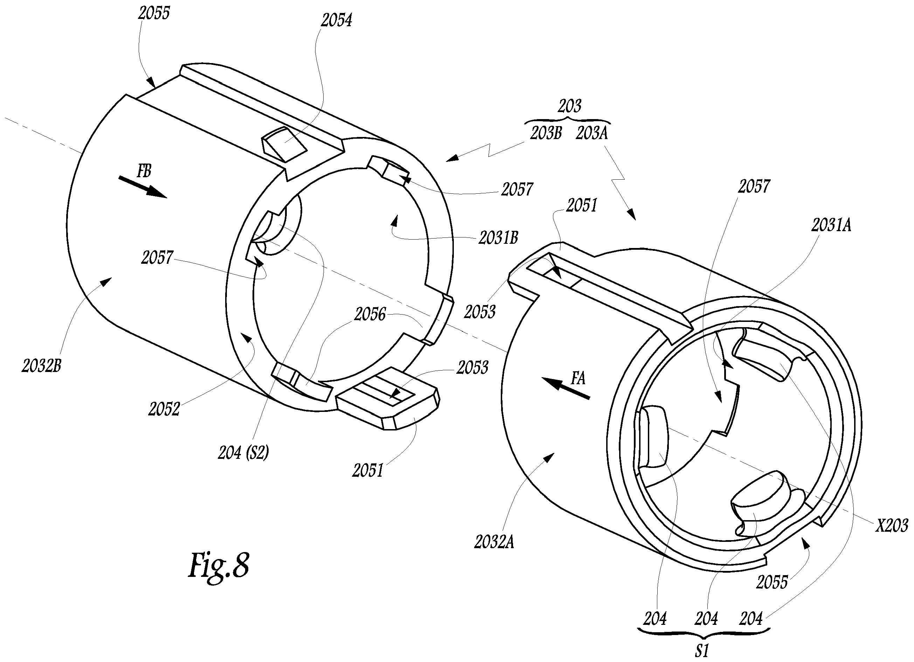

A la figure 8, seul le manchon 203 d'un dispositif d'accouplement conforme à un quatrième mode de réalisation de l'invention est représenté. Les embouts de ce dispositif sont identiques à ceux du premier mode de réalisation. Ce manchon 203 est bipartite, en ce sens qu'il est constitué par l'assemblage de deux pièces monobloc et identiques 203A et 203B. Chacune des pièces 203A et 203B comprend une série de trois pions 204, la série S1 des pions 204 de la pièce 203A étant visible à la figure 8, alors que seul un des pions 204 de la série S2 de la pièce 203B est visible sur cette figure.

Chaque pièce 203A et 203B est pourvue d'une languette 2051 qui s'étend en saillie par rapport à une surface d'extrémité 2052 tournée vers l'autre pièce. Chaque languette 2051 est pourvue d'une ouverture centrale 2053 destinée à recevoir une dent 2054 disposée au centre d'une rainure 2055 ménagée dans la surface externe 2032A ou 2032B de chaque pièce 203A ou 203B. A partir de la surface d'extrémité 2052 de chaque pièce 203A ou 203B s'étendent deux pattes 2056 destinées à être engagées dans des encoches 2057 de forme correspondante ménagées sur la surface interne 2031 A ou 2031B de la pièce 203A ou 203B considérée.

Ainsi, le manchon 203 est constitué en alignant les pièces 203A et 203B sur l'axe X203 du manchon, en mettant en regard leurs surfaces d'extrémité 2052, en rapprochant les pièces 203A et 203B en translation selon l'axe X203 et en engageant la languette 2051 de chaque pièce dans la rainure 2055 de l'autre pièce jusqu'à faire pénétrer la dent 2054 de l'autre pièce dans l'ouverture 2053 de chaque languette. Ce mouvement de rapprochement est représenté par les flèches FA et FB à la figure 8.

Lors de ce rapprochement, les pattes 2056 d'une pièce 203A ou 203B pénètrent dans les encoches 2057 de l'autre pièce, et réciproquement.

La géométrie des pièces 203A et 203B est choisie pour que, lorsqu'elles sont assemblées pour constituer ensemble le manchon 203, leurs séries S1 et S2 de pions 204 sont décalées angulairement d'un angle γ, par exemple égal à 60°.

Ce mode de réalisation est particulièrement adapté aux dispositifs d'accouplement de faible diamètre qui sont destinés à être intégrés à des actionneurs de diamètre inférieur à 30 mm, par exemple égal à 25 ou 28 mm. En effet, les pièces 203A et 203B peuvent être moulées de façon relativement aisée, plus aisée que le manchon monobloc du troisième mode de réalisation dans le cas d'un manchon de petit diamètre.

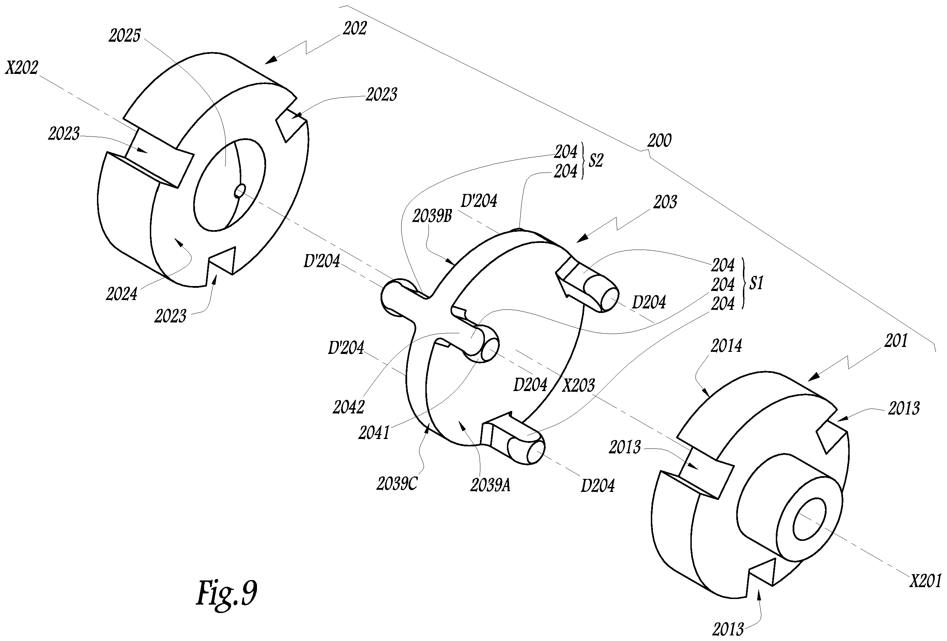

Dans le cinquième mode de réalisation représenté à la figure 9, les deux embouts 201 et 202 d'un dispositif 200 conforme à l'invention sont respectivement pourvus de trois rainures 2013 et 2023 reparties à 120° autour d'un axe central X201 ou X202 de l'embout 201 ou 202 considéré.

Ces embouts 201 et 202 coopèrent avec un plateau 203 qui appartient également au dispositif 200, qui permet un accouplement en rotation des embouts 201 et 202 et qui est centré sur un axe X203 globalement parallèle aux axes X201 et X202 en configuration d'utilisation. Le plateau 203 est disposé entre les embouts 201 et 202, le long d'un des axes X201 et X202.

Le plateau 203 comprend deux surfaces axiales 2039A et 2039B qui sont perpendiculaires à l'axe X203 et globalement en forme de disque. Ces surfaces constituent les extrémités axiales de la partie centrale du plateau 203.

A partir de la surface 2039A s'étendent trois pions 204 qui constituent ensemble une première série S1 de pions et qui sont destinés à être chacun engagé dans une rainure 2013 de l'embout 201.

Chaque pion 204 de cette série de pions s'étend selon une direction D204 parallèle à l'axe X203 et qui s'éloigne de la surface 2039A.

Chaque pion 2041 comprend une queue 2042 et une tête 2041 qui constitue son extrémité opposée à la surface 2039A et qui est en forme de tronçon de sphère. Les faces radiales interne et externe de la tête 2041 d'un pion 204 sont tronquées pour être dans le prolongement des faces radiales interne et externe de sa queue 2042. En outre, la face d'extrémité d'une tête 2041 est également tronquée, ce qui en limite la longueur, mesurée parallèlement à la direction d204 ou à l'axe X203.

La surface 2039B du plateau 203 est également pourvue de trois pions 204 dont deux sont visibles à la figure 9 et qui présentent sensiblement la même géométrie que les pions 204 de la première série de pions, au fait près qu'ils s'étendent, chacun selon une direction D'204 parallèle à l'axe X203 et dirigée en sens opposé par rapport à une direction D104. En d'autres termes, les pions 204 de la deuxième série S2 s'étendent, par rapport à une portion centrale 2039C en forme de disque définie, axialement le long de l'axe X203, entre les surfaces 2039A et 2039B, dans une direction opposée par rapport aux pions 204 de la première série S1.

Les pions 204 de chaque série S1 et S2 sont repartis à 120° autour de l'axe X203 et les pions des deux séries sont disposés dans le prolongement les uns des autres. En d'autres termes, les pions 204 des deux séries S1 et S2 sont alignés selon les directions D204 et D'204 qui sont parallèles à l'axe X203.

En variante, les pions des séries S1 et S2 pourraient être décalés angulairement autour de l'axe X203.

Par ailleurs, la surface axiale 2024 de l'embout 202 qui est perpendiculaire à l'axe X202 et orientée vers le plateau 203 est pourvue d'une portion 2025 en saillie parallèlement à l'axe X203 et en forme de tronçon de sphère. Cette portion 2025 vient en appui contre la surface 2039B en configuration montée du dispositif d'accouplement 200. De la même façon, la surface axiale 2014 de l'embout 201 qui est perpendiculaire à l'axe X201 et orientée vers le plateau 203 est équipé d'une partie en saillie bombée, en forme de tronçon de sphère, qui n'est pas visible à la figure 9 mais qui vient en appui contre la surface 2039A du plateau 203. Ces portions en saillie et en forme de tronçon de sphère prévues respectivement sur les embouts d'entrée en de sortie 201 et 202 permettent de renforcer l'accouplement car elles réalisent un point de contact tangentiel entre les pièces 201 et 203, d'une part, 202 et 203, d'autre part. Ce point de contact est actif dans toutes les configurations du dispositif 200, y compris lorsque les axes X201 et X202 ne sont pas alignés. Ce point de contact permet de limiter les frottements parasites à l'interface entre les pièces 201, 202 et 203.

En variante, seul un des embouts 201 et 202 est équipé d'une telle portion en saillie 2025 ou équivalente. Selon une autre variante, une portion en saillie comparable à la portion 2025 est prévue sur l'une des surfaces 2039A et 2039B ou sur ces deux surfaces. Dans ce cas, les surfaces 2014 et 2024 en sont dépourvues.

Selon une autre variante, le plateau 203 n'est pas en contact axial avec les embouts 201 et 202 au niveau des surfaces 2014, 2024, 2039A et 2039B. Dans ce cas, il n'est pas nécessaire de prévoir de portion en saillie analogue aux portions 2025 et équivalente sur ces surfaces.

Dans les différents modes de réalisation, le manchon ou le plateau 203 peut être réalisé en matériau synthétique, notamment en thermoplastique.

Selon une variante non représentée de l'invention, les embouts 201 et 202 peuvent être remplacés par les extrémités des arbres 105 et 106 qui sont alors usinées pour former les rainures 2013 et 2023. Ces extrémités forment alors des organes solidaires en rotation avec ces arbres, au sens de l'invention.

Selon une autre variante également non représentée, les embouts 201 et 202 peuvent être identiques et pourvu d'un alésage central étagé permettant leur montage sur des arbres de deux diamètres différents. Dans ce cas, leurs rainures longitudinales externes débouchent à leurs deux extrémités. Il faut alors prévoir d'autres moyens, non représentés, pour caler axialement le manchon des quatre premiers modes de réalisation sur son arbre. En effet, celui-ci, dans les exemples présentés, est calé axialement par l'intermédiaire des pions au fond non-débouchant des rainures.

L'invention est décrite ci-dessus dans le cadre d'une utilisation avec un volet roulant pourvu d'un tablier souple. Elle est également applicable avec d'autres types de volets ou de stores ainsi qu'avec un écran de projection d'images. L'invention est également applicable pour la manoeuvre d'un ouvrant, tel qu'un ouvrant de portail ou un volet articulé autour d'un axe vertical au voisinage d'une ouverture de passage, telle qu'une porte ou une fenêtre.

Quel que soit le mode de réalisation ou la variante envisagé, l'élément d'accouplement 203 est rigide lorsqu'il est utilisé dans le dispositif 200, ce qui permet une transmission de couple efficace entre les embouts 201 et 202. Du fait de la coopération des pions 204 avec les rainures 2013 et 2023, une possibilité de déplacement dans plusieurs directions existe, à l'interface entre les pièces 201 et 203, d'une part, 202 et 203, d'autre part, sans qu'il soit nécessaire d'utiliser une structure multipartite et complexe.

Les caractéristiques techniques des modes de réalisation et variantes envisagés ci-dessus peuvent être combinées entre elles.

## Revendications

1. Dispositif d'accouplement (200) destiné à transmettre un couple entre un arbre de sortie et un arbre d'entrée appartenant à une installation domotique de fermeture, de protection solaire ou de projection, tels qu'un arbre de sortie (105) d'un moteur électrique (103) et un arbre d'entrée (106) d'un réducteur (104) d'un actionneur (100) d'entraînement d'un écran (2) ou d'un ouvrant, ce dispositif d'accouplement comprenant :
- un premier organe (201) solidaire ou destiné à être rendu solidaire en rotation avec l'arbre de sortie (105) et pourvu d'au moins une rainure longitudinale externe (2013) et
- un deuxième organe (202) solidaire ou destiné à être rendu solidaire en rotation de l'arbre d'entrée (106) et pourvu d'au moins une rainure longitudinale externe (2023) et
- un élément (203) d'accouplement en rotation entre les premier et deuxième organes, qui est équipé, sur au moins une surface (2031 ; 2039A, 2039B), d'au moins deux séries (S1, S2) de pions (204) en saillie par rapport à cette surface, ces pions étant respectivement engagés dans la rainure longitudinale externe (2013) du premier organe (201) et dans la rainure longitudinale externe (2023) du deuxième organe (202),
**caractérisé en ce que** chaque pion (204) comprend une tête (2041) en tronçon de sphère qui dépasse de la surface (2031 ; 2039B) de l'élément d'accouplement (203).

2. Dispositif selon la revendication 1, **caractérisé en ce que** l'élément d'accouplement (203) est un manchon dans le volume intérieur (V203) duquel sont engagés au moins partiellement les premier et deuxième organes (201, 202) et **en ce que** les pions (204) des deux séries (S1, S2) de pions s'étendent en saillie par rapport à une surface radiale interne (2031) de ce manchon.

3. Dispositif selon la revendication 1, **caractérisé en ce que** l'élément d'accouplement (203) est un plateau disposé entre les premier et deuxième organes (201, 202), le long d'un axe de rotation (X201, X202) d'un de ces organes, et **en ce que** les pions (204) des deux séries (S1, S2) de pions s'étendent en saillie par rapport à deux surfaces axiales (2039A, 2039B) de ce plateau, dans deux directions opposées (D204, D'204) parallèles à l'axe de rotation.

4. Dispositif d'accouplement selon l'une des revendications précédentes, **caractérisé en ce que** les pions (204) sont des pièces rapportées sur l'élément d'accouplement (203) et immobilisées sur celui-ci en rotation, par coincement, sertissage ou coopération de formes.

5. Dispositif selon l'une des revendications précédentes, **caractérisé en ce que** chaque premier et deuxième organe (201, 202) est pourvu de plusieurs rainures longitudinales externes (2013, 2023) et l'élément d'accouplement (203) est équipé de plusieurs pions (204), en nombre égal à la somme des nombre de rainures longitudinales des premiers et deuxièmes organes, avec une première série (S1) de pions (204) situés à proximité d'une première extrémité axiale (2034 ; 2039A) de l'élément d'accouplement et chacun respectivement engagé dans l'une des rainures longitudinales externes (2013) du premier organe et une deuxième série (S2) de pions (204) situés à proximité d'une deuxième extrémité axiale (2035 ; 2039B) de l'élément d'accouplement, opposée à la première extrémité axiale, chacun respectivement engagé dans l'une des rainures longitudinale externes (2023) du deuxième organe.

6. Dispositif selon la revendication 5, **caractérisé en ce que** les rainures longitudinales externes et les pions sont régulièrement répartis, respectivement autour des axes longitudinaux et centraux (X201, X202, X203) des premiers et deuxième organes (201, 202) et de l'élément d'accouplement (203).

7. Dispositif selon l'une des revendications précédentes, **caractérisé en ce que** les pions (204) de la deuxième série (S2) sont décalés, angulairement autour d'un axe (X203) longitudinal et central de l'élément d'accouplement (203), par rapport aux pions de la première série (S1).

8. Dispositif selon les revendications 6 et 7, **caractérisé en ce que** le décalage angulaire (γ), entre deux pions (204) appartenant respectivement aux première et deuxième séries (S1, S2), a une valeur égale à la moitié de la valeur du décalage angulaire (α, β) entre deux pions (204) d'une même série.

9. Dispositif selon l'une des revendications 1 à 6, **caractérisé en ce que** les pions (204) des deux séries (S1, S2) sont alignés selon des directions parallèles (D204, D'204) à un axe (X203) central de l'élément d'accouplement (203).

10. Dispositif selon l'une des revendications 5 à 9, **caractérisé en ce que** chacun des premier et deuxième organes (201, 202) est pourvu de trois rainures longitudinales externes (2013, 2023) reparties à 120° autour d'un axe central (X201, X202) de cet organe et l'élément d'accouplement (203) est équipé de deux séries (S1, S2) de trois pions (204), les pions (204) de chaque série (S1, S2) étant repartis à 120° autour d'un axe longitudinal et central (X203) de l'élément d'accouplement (203).

11. Dispositif selon l'une des revendications 5 à 10, **caractérisé en ce que** l'élément d'accouplement (203) est pourvu, sur au moins un secteur angulaire situé entre deux pions (204) d'une même série (S1, S2), d'un évidement (2037).

12. Dispositif selon l'une des revendications 1 à 11, **caractérisé en ce que** les pions (204) sont monoblocs avec l'élément d'accouplement (203).

13. Dispositif selon la revendication 3, **caractérisé en ce qu'**une surface axiale (2014, 2024, 2039A, 2039B) du premier organe (201), du deuxième organe (202) ou du plateau (203) est pourvue d'une portion (2025) en saillie selon une direction parallèle à un axe (X203) central du plateau, cette portion en saillie venant en appui sur une surface axiale du plateau (203), du premier organe (201) ou du deuxième organe (202).

14. Installation domotique comprenant un ouvrant (2), un écran de fermeture ou de protection solaire ou un écran de projection, **caractérisée en ce qu'**elle comprend un dispositif d'accouplement (200) selon l'une des revendications précédentes, intercalé entre un arbre de sortie (105), notamment d'un moteur électrique (103), et un arbre d'entrée (106), notamment d'un réducteur (104) d'entraînement de l'ouvrant ou de l'écran.

## Patentansprüche

1. Kupplungsvorrichtung (200) zum Übertragen eines Drehmoments zwischen einer Ausgangswelle und einer Eingangswelle, die zu einer Gebäudeanlage zum Verschließen, zum Sonnenschutz oder zum Projizieren gehören, wie einer Ausgangswelle (105) eines elektrischen Motors (103) und einer Eingangswelle (106) eines Untersetzungsgetriebes (104) einer Stellvorrichtung (100) zum Antreiben eines Schirms (2) oder eines Öffnungselements, wobei die Kupplungsvorrichtung umfasst:
- ein erstes Element (201), das mit einer Ausgangswelle (105) drehfest verbunden ist oder vorgesehen ist, drehfest verbunden zu werden, und mit mindestens einer Außenlängsnut (2013) versehen ist, und
- ein zweites Element (201), das mit einer Eingangswelle (105) drehfest verbunden ist oder vorgesehen ist, drehfest verbunden zu werden, und mit mindestens einer Außenlängsnut (2023) versehen ist, und
- ein drehendes Kupplungselement (203) zwischen dem ersten Element und dem zweiten Element, das auf mindestens einer Fläche (2031; 2039A, 2039B) mit mindestens zwei Reihen (S1, S2) von in Bezug auf diese Fläche hervorspringenden Zapfen (204) ausgerüstet ist, wobei diese Zapfen jeweils in die Außenlängsnut (2013) des ersten Elements (201) und in die Außenlängsnut (2023) des zweiten Elements (202) eingreifen,
**dadurch gekennzeichnet, dass** jeder Zapfen (204) einen Kopf (2041) in Kugelabschnittsform umfasst, der von der Fläche (2031; 2039B) des Kupplungselement (203) hervorsteht.

2. Vorrichtung nach Anspruch 1, **dadurch gekennzeichnet, dass** das Kupplungselement (203) eine Hülse ist, in dessen Innenvolumen (V203) mindestens teilweise das erste und zweite Element (201, 202) eingreifen, und dass die Zapfen (204) der zwei Zapfenreihen (Sl, S2) sich in Bezug auf eine radiale Innenfläche (2031) dieser Hülse hervorspringend erstrecken.

3. Vorrichtung nach Anspruch 1, **dadurch gekennzeichnet, dass** das Kupplungselement (203) eine Platte ist, die zwischen dem ersten und zweiten Element (201, 202) entlang einer Drehachse (X201, X202) eines dieser Elemente angeordnet ist, und dass die Zapfen (204) der zwei Zapfenreihen (S1, S2) sich in Bezug auf zwei axiale Flächen (2039A, 2039B) dieser Platte hervorspringend in zwei entgegengesetzte Richtung (D204, D'204) parallel zur Drehachse erstrecken.

4. Kupplungsvorrichtung nach einem der vorhergehenden Ansprüche, **dadurch gekennzeichnet, dass** die Zapfen (204) an dem Kupplungselement (203) angesetzte Teile sind, die hinsichtlich der Drehung an diesem durch Klemmen, Pressen oder Formenschluss festgelegt sind.

5. Vorrichtung nach einem der vorhergehenden Ansprüche, **dadurch gekennzeichnet, dass** jedes erste und zweite Element (201, 202) mit mehreren Außenlängsnuten (2013, 2023) versehen sind und das Kupplungselement (203) mit mehreren Zapfen (204) in einer Anzahl gleich der Summe der Anzahl der Längsnuten des ersten und zweiten Elements ausgerüstet ist, wobei eine ersten Reihe (S1) von Zapfen (204), die in der Nähe eines ersten axialen Endes (2034; 2039A) des Kupplungselements liegen und jeweils in eine der Außenlängsnuten (2013) des ersten Elements eingreifen, und eine zweiten Reihe (S2) von Zapfen (204), die in der Nähe eines zweiten axialen Endes (2035; 2039B) des Kupplungselements, entgegengesetzt zum ersten axialen Ende liegen und jeweils in eine der Außenlängsnuten (2023) des zweiten Elements eingreifen, vorgesehen sind.

6. Vorrichtung nach Anspruch 5, **dadurch gekennzeichnet, dass** die Außenlängsnuten und die Zapfen jeweils um Längs- und Mittelachsen (X201, X202; X203) des ersten und des zweiten Elements (201, 202) und des Kupplungselements (203) gleichmäßig verteilt sind.

7. Vorrichtung nach einem der vorhergehenden Ansprüche, **dadurch gekennzeichnet, dass** die Zapfen (204) der zweiten Reihe (S2) winkelmäßig um eine Längs- und Mittelachse (X203) des Kupplungselements (203) in Bezug auf die Zapfen der ersten Reihe (S1) versetzt sind.

8. Vorrichtung nach den Ansprüchen 6 und 7, **dadurch gekennzeichnet, dass** der Winkelversatz (γ) zwischen zwei Zapfen (204), die jeweils zur ersten und zur zweiten Reihe (S1, S2) gehören, einen Wert gleich der Hälfte des Wertes des Winkelversatzes (α, β) zwischen zwei Zapfen (204) einer selben Reihe aufweist.

9. Vorrichtung nach einem der Ansprüche 1 bis 6, **dadurch gekennzeichnet, dass** die Zapfen (204) der zwei Reihen (S1, S2) gemäß Richtungen (D204, D'204) parallel zu einer Mittelachse (X203) des Kupplungselement (203) ausgerichtet sind.

10. Vorrichtung nach einem der Ansprüche 5 bis 9, **dadurch gekennzeichnet, dass** jedes des ersten und zweiten Elements (201, 202) mit drei Außenlängsnuten (2013, 2023) versehen ist, die um 120° um eine Mittelachse (X201, X202) dieses Elements herum verteilt sind, und dass das Kupplungselement (203) mit zwei Reihen (S1, S2) von drei Zapfen (204) ausgerüstet ist, wobei die Zapfen (204) jeder Reihe (S1, S2) um 120° um eine Längs- und Mittelachse (X203) des Kupplungselements (203) herum verteilt sind.

11. Vorrichtung nach einem der Ansprüche 5 bis 10, **dadurch gekennzeichnet, dass** das Kupplungselement (203) auf mindestens einem Winkelsektor, der zwischen zwei Zapfen (204) einer selben Reihe (S1, S2) liegt, mit einer Ausnehmung (2037) versehen ist.

12. Vorrichtung nach einem der Ansprüche 1 bis 11, **dadurch gekennzeichnet, dass** die Zapfen (204) einstückig mit dem Kupplungselement (203) ausgeführt sind.

13. Vorrichtung nach Anspruch 3, **dadurch gekennzeichnet, dass** eine axiale Fläche (2014, 2024, 2039A, 2039B) des ersten Elements (201), des zweiten Elements (202) oder der Platte (203) mit einem gemäß einer Richtung parallel zu einer Mittelachse (X203) der Platte hervorspringenden Bereich (2025) versehen ist, wobei dieser vorspringende Bereich an einer axialen Fläche der Platte (203), des ersten Elements (201) oder des zweiten Elements (202) in Anlage kommt.

14. Gebäudeanlage, ein Öffnungselement (2), einen Verschließ- oder Sonnenschutzschirm oder einen Projektionsschirm umfassend, **dadurch gekennzeichnet, dass** sie eine Kupplungsvorrichtung (200) nach einem der vorhergehenden Ansprüche umfasst, die zwischen einer Ausgangswelle (105), insbesondere eines elektrischen Motors (103), und einer Eingangswelle (106), insbesondere eines Untersetzungsgetriebes (104) zum Antrieb des Öffnungselements oder des Schirms angeordnet ist.

## Claims

1. Coupling device (200) designed for transmitting a torque between an output shaft and an input shaft belonging to a home automation equipment for closing, solar protection or projection, such as an output shaft (105) of an electric motor (103) and an input shaft (106) of a reducing gear (104) of an actuator (100) for driving a screen (2) or a leaf, this coupling device including:
- a first member (201) which is rotatably secured, or suitable for being rotatably secured, to the output shaft (105), and which is provided with at least one longitudinal outer groove (2013), and
- a second member (202) which is rotatably secured, or suitable for being rotatably secured, to the input shaft (106), and which is provided with at least one longitudinal outer groove (2023) and
- an element (203) for rotatably coupling the first and second members together, which has, on at least one surface (2031; 2039A, 2039B) thereof, at least two series (S1, S2) of lugs (204) projecting from said surface, wherein the lugs are inserted into the longitudinal outer groove (2013) of the first member (201) and the longitudinal outer groove (2023) of the second member (202), respectively,
**characterized in that** each lug (204) comprises a head (2041) with a spherical section (2041) which projects from the surface (2031; 2039B) of the coupling element (203).

2. Device according to claim 1, **characterised in that** the coupling element (203) is a sleeve in the internal volume (V203) whereof the first and second members (201, 202) are inserted at least partially and **in that** the lugs (204) of the two series (S1, S2) of lugs project from an inner radial surface (2031) of said sleeve.

3. Device according to claim 1, **characterised in that** the coupling element (203) is a plate arranged between the first and second members (201, 202), along an axis of rotation (X201, X202) of one of these members, and **in that** the lugs (204) of the two series (S1, S2) of lugs project from two axial surfaces (2039A, 2039B) of this plate, in two opposite directions (D204, D'204) parallel to the axis of rotation.

4. Device according to any of the above claims, **characterised in that** the lugs (204) are mounted on the coupling element (203) and locked thereon in rotation, by means of wedging, crimping or engaging shapes.

5. Device according to any of the above claims, **characterised in that** each first and second member (201, 202) is provided with a plurality of longitudinal outer grooves (2013, 2023) and the coupling element (203) is equipped with a plurality of lugs (204), equal in number to the sum of the numbers of longitudinal outer grooves of the first and second members, with a first series (S1) of lugs (204) situated in the vicinity of a first axial end (2034; 2039A) of the coupling element and each respectively inserted into one of the longitudinal outer grooves (2013) of the first member and a second series (S2) of lugs (204) situated in the vicinity of a second axial end (2035; 2039B) of the coupling element, opposite the first axial end, each respectively inserted into one of the longitudinal outer grooves (2023) of the second member.

6. Device according to claim 5, **characterised in that** the longitudinal outer grooves and the lugs are regularly distributed, respectively about the longitudinal and central axes (X201, X202, X203) of the first and second members (201, 202) and the coupling element (203).

7. Device according to any preceding claim, **characterised in that** the lugs (204) of the second series (S2) are offset, angularly about a longitudinal and central axis (X203) of the coupling element (203), in relation to the lugs of the first series (S1).

8. Device according to claims 6 and 7, **characterised in that** the angular offset (γ) between two lugs (204) respectively belonging to the first and second series (S1, S2) has a value equal to half the value of the angular offset (α, β) between two lugs (204) of the same series.

9. Device according to any of claims 1 to 6, **characterised in that** the lugs (204) of the two series (S1, S2) are aligned in directions (D204, D'204) parallel to a central axis (X203) of the coupling element (203).

10. Device according to any of claims 5 to 9, **characterised in that** each of the first and second members (201, 202) is provided with three longitudinal outer grooves (2013, 2023) distributed at 120° about a central axis (X201, X202) of this member and the coupling element (203) is equipped with two series (S1, S2) of three lugs (204), the lugs (204) of each series (S1, S2) being distributed at 120° about a longitudinal and central axis (X203) of the coupling element (203).

11. Device according to any of claims 5 to 10, **characterised in that** the coupling element (203) is provided, on at least one angular sector situated between two lugs (204) of the same series (S1, S2), with a recess (2037).

12. Device according to one of claims 1 to 11, **characterised in that** the lugs (204) are integral with the coupling element (203).

13. Device according to claim 3, **characterised in that** an axial surface (2014, 2024, 2039A, 2039B) of the first member (201), the second member (202) or the plate (203) is provided with a portion (2025) projecting in a direction parallel to a central axis (X203) of the plate, this projecting portion bearing on an axial surface of the plate (203), of the first member (201) or the second member (202).

14. Home automation equipment including a leaf (2), a closing or solar protection screen or a projection screen, **characterised in that** it includes a coupling device (200) according to any of the above claims, inserted between an output shaft (105), particularly of an electric motor (103), and an input shaft (106), particularly of a reducing gear (104) for driving the leaf or screen.
